(19) Europäisches Patentamt
European Patent Office
Office européen des brevets

(11) **EP 2 721 375 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(21) Anmeldenummer: **12721767.7**

(22) Anmeldetag: **10.05.2012**

(51) Int Cl.:
*G05D 3/12* *(2006.01)*     *G01D 21/00* *(2006.01)*

(86) Internationale Anmeldenummer:
**PCT/EP2012/002021**

(87) Internationale Veröffentlichungsnummer:
**WO 2012/175162 (27.12.2012 Gazette 2012/52)**

(54) **VERFAHREN UND VORRICHTUNG ZUR ZYKLISCHEN DIGITALEN ÜBERTRAGUNG EINES POSITIONSWERTES EINES BEWEGTEN OBJEKTES MIT TRÄGER MASSE**

METHOD AND DEVICE FOR THE CYCLIC DIGITAL TRANSMISSION OF A POSITION VALUE OF A MOVING OBJECT WITH INERTIAL MASS

PROCÉDÉ ET DISPOSITIF POUR UNE TRANSMISSION NUMÉRIQUE CYCLIQUE D'UNE VALEUR DE POSITION D'UN OBJET EN DÉPLACEMENT POURVU D'UNE MASSE D'INERTIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2011 DE 102011105524**

(43) Veröffentlichungstag der Anmeldung:
**23.04.2014 Patentblatt 2014/17**

(60) Teilanmeldung:
**16000552.6 / 3 059 555**

(73) Patentinhaber: **Sew-Eurodrive GmbH & Co. KG 76646 Bruchsal (DE)**

(72) Erfinder: **SIMON, Olaf 76646 Bruchsal (DE)**

(56) Entgegenhaltungen:
**EP-A2- 2 023 092     DE-B3-102007 062 333 US-A1- 2001 006 344**

**Beschreibung**

Die Erfindung betrifft ein Verfahren und Vorrichtung zur zyklischen digitalen Übertragung eines Positionswertes eines bewegten Objektes mit träger Masse.

Winkelsensoren sind allgemein bekannt. Bei Winkelsensoren, die als Inkrementalgeber ausgeführt sind, wird der erfasste Winkelwert einer Welle digital übertragen.

Aus der DE 10 2007 062333 B3 ist als nächstliegender Stand der Technik ein Verfahren zur Übertragung von Multiturn-Modulo-Leitachsdaten bekannt.

Aus der US 2001/ 006344 A1 ist ein Verfahren zur Detektion einer Winkellage eines drehbar gelagerten Maschinenteils bekannt.

Der Erfindung liegt daher die Aufgabe zugrunde, die Übertragung der erfassten Werte vom Winkelsensor an ein elektronisches Gerät weiterzubilden, wobei die Sicherheit verbessert sein soll, insbesondere eine gegen Störungen robuste Datenübertragung verwendet werden soll.

Erfindungsgemäß wird die Aufgabe bei dem Verfahren nach den in Anspruch 1 und bei der Vorrichtung nach den in Anspruch 13 angegebenen Merkmalen gelöst.

Wichtige Merkmale bei dem Verfahren zur Regelung eines Antriebs sind, dass zeitlich wiederkehrend ein Positionswert erfasst wird und die zugehörige Information an eine Regelvorrichtung übertragen wird, wobei der Positionswert gekennzeichnet ist durch zumindest zwei Werte, insbesondere Teilwinkelwert und Feinwinkelwert, insbesondere digitale Werte, wobei der erste Wert mit einer ganzen Zahl kennzeichenbar ist und jeder Zahl ein Positionswertebereich zugeordnet ist, wobei jedem durch einen ersten Wert gekennzeichneten Positionsbereich zueinander separate Teilbereiche des Positionsbereichs zugeordnet sind, wobei jeder dieser Teilbereiche durch einen zweiten Wert gekennzeichnet ist, der als ganze Zahl kennzeichenbar ist, wobei der zweite Wert zeitlich vor dem ersten Wert übertragen wird, wobei

(i) nach Übertragen des neu erfassten zweiten Wertes aus diesem neu erfassten und dem zuvor übertragenen zweiten Wert ein Modellwert für den ersten Wert bestimmt wird, und der so bestimmte Positionswert von einer Regeleinrichtung verwendet wird, um einen aktualisierten Wert einer Stellgröße der Regeleinrichtung zu bestimmen,

(ii) nach dem Übertragen des neu erfassten zweiten Wertes der neu erfasste erste Wert übertragen wird und dann der so bestimmte Modellwert mit dem neu erfassten ersten Wert verglichen wird und bei Nicht-Übereinstimmen eine Aktion ausgeführt wird,

insbesondere wobei die Aktion das Übermitteln und/oder Anzeigen einer Warninformation und/oder das Stillsetzen des Antriebs oder das Überführen des Antriebs in einen sicheren Zustand ist, insbesondere wobei die Stellgröße ein Spannungsraumzeiger, insbesondere ein Statorspannungsraumzeiger eines Elektromotors des Antriebs, ist, insbesondere wobei der Schritt (i) wiederholt wird.

Von Vorteil ist dabei, dass die Sicherheit erhöht ist und die trotzdem besonders frühzeitig in jedem Zyklusschritt die Bestimmung der neuen Stellgröße startbar ist.

Bei einer vorteilhaften Ausgestaltung wird bei der Übertragung des ersten Wertes eine Prüfinformation, insbesondere ein CRC-Datum, übertragen wird, und/oder es wird bei der Übertragung des zweiten Wertes eine weitere Prüfinformation, insbesondere ein CRC-Datum, übertragen wird. Von Vorteil ist dabei, dass die Datenübertragung sicher gestaltbar ist und somit im Fehlerfall die Aktion ausführbar ist.

Bei einer vorteilhaften Ausführungsform ist der Wertebereich des übertragenen Positionswertes derart eingeschränkt, dass sich keine vollständige Umdrehung oder im Fall einer linearen Bewegung andere durch mechanische Gegebenheiten bedingte vollständige Periode abbilden lässt und die tatsächliche Position durch Erkennen von Wertebereichsüberschreitungen in einer Auswerteeinheit gebildet wird, insbesondere

- wobei zu einem ersten Zeitpunkt eine nicht oder eine weit weniger stark wertebereichsbeschränkte Position als im kontinuierlichen Betrieb übertragen wird

- und/oder wobei der Wertebereich dadurch bestimmt wird, dass die in einem Abtastzyklus auftretende Wegdifferenz bei maximaler Geschwindigkeit kleiner als die Hälfte des gewählten Wertebereichs ist, wobei der Wertebereich möglichst klein gewählt wird

- und/oder wobei anstelle der wertebereichsbeschränkenden Absolutposition die Differenz zur vorherigen Position mit gleicher Wertebereichsbeschränkung übertragen wird.

Von Vorteil ist dabei, dass ein nur geringer Datenstrom übertragen werden muss und somit eine geringe Bandbreite ausreicht für die Übertragung. Außerdem ist eine erhöhte Sicherheit realisierbar, da nach Übertragen des vollständigen Positionswertes ein Vergleich mit dem aus dem wertebereichseingeschränkten Wert bestimmten Positionswert ausführbar ist und somit überwachbar ist, ob die maximal erlaubte Beschleunigung überschritten wurde, also ein unvorhergesehenes Ereignis, wie Fehler oder dergleichen, aufgetreten ist. Alternativ ist auch das zyklische Übertragen des vollständigen Positionswerts verzichtbar, wodurch somit eine Datenverbindung mit geringer Bandbreite ausreicht für eine schnelle Positionswertübertragung. Die von einem Sensor erfassten Daten sind also komprimierbar und datenkomprimiert übertragbar.

Durch den Vergleich der Differenz mit dem halben Wertebereich ist eine Rekonstruktion der vollständigen Information über den Positionswert in einfacher Weise ausführbar.

Von Vorteil ist auch, dass die digitale Übertragung robust ist gegen Störeinwirkungen, wie beispielsweise Magnetfeldeinstrahlungen oder dergleichen.

Wichtige Merkmale bei dem alternativen Verfahren zur zyklischen digitalen Übertragung eines Positionswertes eines bewegten Objektes mit träger Masse nach Anspruch 2 sind, dass der Wertebereich des übertragenen Positionswertes gegenüber dem Wertebereich möglicher Positionswerte eingeschränkt ist, insbesondere so dass sich keine vollständige Umdrehung oder im Fall einer linearen Bewegung andere durch mechanische Gegebenheiten bedingte vollständige Periode abbilden lässt,

und die tatsächliche Position dadurch bestimmt wird, dass aus der vorherigen Position und der vorherig bestimmten Geschwindigkeit ein Schätzwert für die Position gebildet wird und diese mittels des wertebereichsbeschränkten übertragenen Positionswertes korrigiert wird, insbesondere

- wobei durch einen Vergleich des wertebereichsbeschränkten Positionsschätzwertes mit dem wertebereichsbeschränkten übertragenen Positionswert eine Wertebereichsüberschreitung ermittelt und zur Korrektur des Schätzwertes herangezogen wird,

- und/oder wobei einmalig am Anfang eine Position übertragen wird, deren Werteberiech den Bereich möglicher auftretender Positionen umfasst

- und/oder wobei anstatt der wertebereichsbeschränkten Absolutposition die Differenz zur vorherigen Position mit gleicher Wertebereichsbeschränkung übertragen wird.

Von Vorteil ist dabei, dass der Positionswert an einer trägen Masse erfasst wird. Durch die daher ermöglichte Begrenzung der auftretenden Beschleunigungen und Rucke, also zeitlichen Ableitungen der Beschleunigungen, ist ermöglicht, dass die Geschwindigkeitsänderung in der zugehörigen Zykluszeit begrenzt ist und somit ein Schätzwert nur korrigiert werden muss um weniger als eine Auflösungseinheit, beispielsweise einer grob aufgelösten Spur.

Bei einer alternativen Ausführungsform ist der Positionswert gekennzeichnet durch zumindest zwei Werte, insbesondere Teilwinkelwert und Subwinkelwert und/oder Feinwinkelwert, insbesondere digitale Werte, wobei der erste Wert mit einer ganzen Zahl kennzeichenbar ist und jeder Zahl ein Positionswertebereich zugeordnet ist,

wobei jedem durch einen ersten Wert gekennzeichneten Positionsbereich zueinander separate Teilbereiche des Positionsbereichs zugeordnet sind, wobei jeder dieser Teilbereiche durch einen zweiten Wert gekennzeichnet ist, der als ganze Zahl kennzeichenbar ist,

wobei zu einem ersten Zeitpunkt ein Positionswert erfasst wird und der zugehörige erste und zweite Wert übertragen wird,

wobei

(i) ein weiterer Positionswert erfasst wird und der zugehörige, somit neu erfasste, zweite Wert übertragen wird,

(ii) worauf aus dem neu erfassten, zweiten Wert und dem zuvor erfassten, zweiten Wert der durch den ersten Wert gekennzeichnete Positionswertebereich bestimmt wird, also somit auch der zum neu erfassten Positionswert zugehörige erste Wert.

Von Vorteil ist dabei, dass wiederum zu einem ersten Zeitpunkt die vollständige Information über den erfassten Positionswert vorliegt und somit ein daraufhin nur relativ zu diesem ersten Positionswert bestimmter neuer Positionswert bestimmt wird. Somit ist eine komprimierte Datenübertragung ermöglicht oder eine erhöhte Redundanz bei der Datenübertragung.

Bei einer vorteilhaften Ausgestaltung weist der Positionswert einen Winkelwert eines drehenden Teiles, also Objektes, wobei das Objekt als träge Masse ein Trägheitsmoment auf. Von Vorteil ist dabei, dass die volle Umdrehung von 360° in mehrere Teilbereiche aufteilbar ist und somit eine Auflösung der vollen Umdrehung in die so entstandenen Positionswertebereiche ermöglicht ist.

Bei einer vorteilhaften Ausgestaltung wird die Übertragung zeitlich wiederkehrend wiederholt, insbesondere also zyklisch wiederholt wird, insbesondere in regelmäßigen Zeitabständen,

insbesondere wobei Schritt (i) und (ii) mehrfach nacheinander ausgeführt werden. Von Vorteil ist dabei, dass ständig wiederkehrend die Position bestimmbar ist. Dabei sind die Zeitabstände vorzugsweise derart kurz, dass wiederum die maximal zu erwartende Positionswertänderung unterhalb eines kritischen Wertes verbleibt, der vorzugsweise einen halben Positionswertebereich unterschreitet.

Bei einer vorteilhaften Ausgestaltung wird bei Schritt (ii) aus dem zuvor erfassten oder bestimmten Positionswert und der zugehörigen Geschwindigkeit ein Schätzwert bestimmt und der zweite Wert des neu erfassten Positionswertes mit dem zweiten Wert des Schätzwertes verglichen und die Differenz zwischen dem zweiten Wert des neu erfassten Positionswertes und dem zweiten Wert des Schätzwertes bestimmt und daraus der zum neu erfassten Positionswert zugehörige Positionsbereich bestimmt. Von Vorteil ist dabei, dass ein Geschwindigkeitswert bekannt ist und daher ein Schätzwert überhaupt bestimmbar ist, indem zum alten Positionswert die aus der Geschwindigkeit und dem zugehörigen Zeitintervall sich ergebende Positionswerteänderung addiert wird.

Bei einer vorteilhaften Ausgestaltung wird bei Schritt (ii) die Differenz zwischen neu erfasstem zweiten Wert und zuvor erfasstem zweiten Wert bestimmt, insbesondere wobei bei Überschreiten eines halben Positionsbereichs darauf geschlossen wird, dass der neu erfasste Positionswert in einem benachbarten Positionsbereich liegt. Von Vorteil ist dabei, dass in einfacher Weise aus der bloßen Differenz und dem Wissen über die maximal zu erwartende Änderung des Positionswertes der neue Positionswert vollständig bestimmbar ist, obwohl nur ein eingeschränkter Wertebereich übertragen werden muss.

Bei einer vorteilhaften Ausgestaltung wird bei Schritt (ii) ein Vergleich zwischen neu erfasstem zweiten Wert und zuvor erfasstem zweiten Wert bestimmt und derjenige benachbarte Bereich bestimmt, in welchem der neu erfasste Positionswert sich befindet, insbesondere wenn die Differenz zwischen neu erfasstem zweiten Wert und zuvor erfasstem zweiten Wert einen halben Positionsbereich überschreitet. Von Vorteil ist dabei, dass in einfacher Weise ein vollständiges Bestimmen des Positionswertes trotz der übertragenen und eingeschränkten Information ermöglicht ist.

Bei einer vorteilhaften Ausgestaltung ist die Änderung der Geschwindigkeit zwischen zwei in einem Zeitabstand Δt nacheinander ausgeführten Positionserfassungen auf einen kritischen Wert begrenzt, insbesondere welcher durch die träge Masse bestimmt oder zumindest mitbestimmt ist. Von Vorteil ist dabei, dass nur eine endliche Anzahl, insbesondere Zwei, von möglichen Positionswerten erreichbar ist und nur aus dieser endlichen Anzahl der neue Positionswert bestimmt werden muss.

Bei einer vorteilhaften Ausgestaltung ist der Positionswert ein Winkelwert oder eine Linearposition, insbesondere wobei die Geschwindigkeit eine Winkelgeschwindigkeit oder eine in Linearrichtung auftretende Geschwindigkeit ist. Von Vorteil ist dabei, dass die Erfindung bei rotatorischen und linearen Antriebsregelungen verwendbar ist, also unabhängig von der Sorte des Positionserfassenden Sensors.

Bei einer vorteilhaften Ausgestaltung sind ein erster und zweiter Wert einer jeweiligen Spur, insbesondere Geberspur, zugeordnet, wobei der erste Wert einer feiner auflösenden Spur als der zweite Wert zugeordnet ist. Von Vorteil ist dabei, dass nur ein eingeschränkter Informationswert übertragen werden muss und trotzdem die vollständige Information über die Position erhältlich ist.

Bei einer vorteilhaften Ausgestaltung sind jedem durch einen zweiten Wert, insbesondere Subwinkelwert, gekennzeichneten Positionsbereich zueinander separate Teilbereiche des Positionsbereichs zugeordnet, wobei jeder dieser Teilbereiche durch einen dritten Wert, insbesondere Feinwinkelwert, gekennzeichnet ist, der als ganze Zahl kennzeichenbar ist,

insbesondere wobei zu dem ersten Zeitpunkt der Positionswert erfasst wird und der zugehörige erste und zweite und dritte Wert übertragen wird,

wobei der dritte mit dem zweiten Wert übertragen wird, insbesondere vor oder nach dem zweiten Wert. Von Vorteil ist dabei, dass als erster Wert ein Teilwinkel und als zweiter Wert ein Subwinkel erfassbar und übertragbar sind, wobei der Subwinkel durch ein Feinwinkelbereich noch feiner auflösbar ist. Dabei genügt dann die Übertragung der Feinwinkel und Subwinkelinformation, um den grober auflösenden Teilwinkel zu bestimmen.

Wichtige Merkmale bei dem Verfahren zur Regelung eines Antriebs sind, dass zeitlich wiederkehrend ein Positionswert erfasst wird und die zugehörige Information an eine Regelvorrichtung übertragen wird, insbesondere mit einem Verfahren nach mindestens einem der vorangegangenen Ansprüche,

wobei der Positionswert gekennzeichnet ist durch zumindest zwei Werte, insbesondere Teilwinkelwert und Feinwinkelwert, insbesondere digitale Werte,

wobei der erste Wert mit einer ganzen Zahl kennzeichenbar ist und jeder Zahl ein Positionswertebereich zugeordnet ist,

wobei jedem durch einen ersten Wert gekennzeichneten Positionsbereich zueinander separate Teilbereiche des Positionsbereichs zugeordnet sind, wobei jeder dieser Teilbereiche durch einen zweiten Wert gekennzeichnet ist, der als ganze Zahl kennzeichenbar ist,

wobei der zweite Wert zeitlich vor dem ersten Wert übertragen wird,

wobei

(i) nach Übertragen des neu erfassten zweiten Wertes aus dem neu erfassten und dem zuvor übertragenen zweiten Wert ein erster Wert bestimmt wird, welcher dem neu erfassten ersten Wert entspricht, und der so bestimmte Positionswert von einer Regeleinrichtung verwendet wird, um einen aktualisierten Wert einer Stellgröße der Regeleinrichtung zu bestimmen,

insbesondere wobei der Schritt (i) wiederholt wird.

Von Vorteil ist dabei, dass die Zeitdauer der Übertragung des ersten Wertes schon nutzbar ist zur Bestimmung des nächsten Stellgrößenwertes.

Wichtige Merkmale bei dem Verfahren zur Regelung eines Antriebs sind, dass zeitlich wiederkehrend ein Positionswert erfasst wird und die zugehörige Information an eine Regelvorrichtung übertragen wird,

wobei der Positionswert gekennzeichnet ist durch zumindest zwei Werte, insbesondere Teilwinkelwert und Feinwinkelwert, insbesondere digitale Werte,

wobei der erste Wert mit einer ganzen Zahl kennzeichenbar ist und jeder Zahl ein Positionswertebereich zugeordnet ist,

wobei jedem durch einen ersten Wert gekennzeichneten Positionsbereich zueinander separate Teilbereiche des Positionsbereichs zugeordnet sind, wobei jeder dieser Teilbereiche durch einen zweiten Wert gekennzeichnet ist, der als ganze Zahl kennzeichenbar ist,

wobei der zweite Wert zeitlich vor dem ersten Wert übertragen wird,

wobei

(i) nach Übertragen des neu erfassten zweiten Wertes aus dem neu erfassten und dem zuvor übertragenen zweiten Wert unter zusätzlicher Berücksichtigung der zuletzt bestimmten Geschwindigkeit, ein erster Wert bestimmt wird, welcher dem neu erfassten ersten Wert entspricht, und der so bestimmte Positionswert von einer Regeleinrichtung verwendet wird, um einen aktualisierten Wert einer Stellgröße der Regeleinrichtung zu bestimmen,

(ii) wobei nach Übertragung des neu erfassten zweiten Wertes aus dem neu erfassten ersten Wert und neu erfassten zweiten Wert der Geschwindigkeitswert aktualisiert wird, wobei auch der zuvor erfasste erst Wert und der zuvor erfasste zweite Wert berücksichtigt wird,

wobei die Schritte (i) und (ii) wiederholt werden. Von Vorteil ist dabei, dass auch bei einer auftretenden Geschwindigkeit ein Schätzwert bestimmbar ist und dieser nur noch korrigiert werden muss.

Bei einer vorteilhaften Ausgestaltung wird nach Übertragen des ersten Wertes dieser verglichen mit dem gemäß Schritt (i) bestimmten Wert und bei Abweichung eine Aktion ausgelöst wird, insbesondere wie Anzeigen und/oder Übermitteln einer Warninformation und/oder Abschalten des Antriebs und/oder Auslösen eines Sicheren Zustandes des Antriebs. Von Vorteil ist dabei, dass die Sicherheit erhöht ist.

Bei einer vorteilhaften Ausgestaltung wird in einem Sensor ein Positionswert erfasst und der Sensor ist über eine digitale Schnittstelle mit einer Auswerteeinheit verbunden,

wobei die Auswerteeinheit einen Speicher aufweist und Mittel zur Bestimmung des Positionswertes aus einem übertragenen wertebereichsbeschränkten Positionswert aufweist,

insbesondere wobei die Auswerteeinheit mit einer Regeleinrichtung verbunden ist.

Von Vorteil ist dabei, dass nur eine geringe Bandbreite bei der Datenübertragung notwendig ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

Bei dem erfindungsgemäßen Antriebssystem ist ein Winkelsensor mit einer Welle des Antriebs, beispielsweise Motorwelle eines umrichtergespeisten Elektromotors oder mit einer Welle eines von einem umrichtergespeisten Elektromotor angetriebenen Getriebes, drehfest verbunden, so dass die Winkelstellung erfassbar ist.

Hierbei wird in einem ersten Zeitabschnitt der Winkelwert in digitaler Form, also als digitales Telegramm oder Wort, übertragen.

Der an die Signalelektronik des Umrichters übertragene Wert wird von einer in der Signalelektronik vorgesehenen Regeleinheit verwendet, um den Motorstrom durch Stellen der Motorspannung auf einen jeweiligen gewünschten Sollwert hin zu regeln.

Der Winkelwert wird dabei gekennzeichnet durch einen Teilwinkelbereich und zumindest noch einen Feinwinkeibereich. Dabei ist der Teilwinkel nur eine grobe Auflösung der gesamten Umdrehung von 360°. Der Feinwinkel unterteilt den jeweiligen Teilwinkelbereich in feinere Winkelabschnitte.

Bei der Übertragung des Winkelwertes wird zeitlich zuerst der Feinwinkelwert übertragen und danach der gröbere Teilwinkelwert

Durch Berücksichtigung von kritischen Werten, insbesondere maximalen Beschleunigungswerten und/oder maximalen Rucken, also zeitlichen Ableitungen der Beschleunigung, und unter Berücksichtigung des zuletzt bekannten Winkelwerts und Winkelgeschwindigkeitswerts ist es für die Signalelektronik ermöglicht, schon aus den Feinwinkelwerten den neu erfassten winkelwert zu bestimmen.

Auf diese Weise ist es der Regeleinheit ermöglicht, besonders früh den neu erfassten Winkelwert für die Regelung zu berücksichtigen. Zur erfindungsgemäßen Bestimmung des neu erfassten Winkelwertes sind nur wenige Rechenschritte notwendig, weshalb nur wenig Rechenzeit aufgewendet werden muss. In der Regeleinheit wird dann aus dem so bestimmten Winkeiwert und weiteren Werten der jeweils neu vom Umrichter zu stellende Motorspannungswert berechnet.

Während dieser Berechnungszeit werden dann auch die gröberen Teilwinkelwerte vom Winkelsensor an die Signalelektronik des Umrichters übertragen.

Somit ist dann rechtzeitig vor dem nächsten Zeitschritt der wirkliche erfasste Winkelwert direkt bekannt. Somit ist dann die Sicherheit erhöht, da der aus dem Feinwinkel bestimmte und der in Gänze übertragene Winkelwert miteinander verglichen werden kann. Außerdem ist für die nächste Winkelbestimmung aus dem nächsten Feinwinkelwert unter Verwendung des ganz übertragenen Winkelwerts und eines entsprechend aktualisierten Winkelgeschwindigkeitswerts ausführbar.

Somit wird - mit anderen Worten - also in jedem Zeitschritt der zuletzt vollständig, umfassend also Feinwinkelwert und Teilwinkelwert, übertragene Wert verwendet und unter Differenzbildung zum vorherigen Wert die aktualisierte Geschwindigkeit bestimmt- Aus diesen Werten wird dann ein Schätzwert bestimmt für den nächsten zu erwartenden Winkelwert. Zur Bestimmung dieses Winkelwertes wird berücksichtigt, dass der Antrieb eine träge Masse, insbesondere linear oder rotatorisch, antreibt und dabei die Geschwindigkeit im zugehörigen Zeitschritt nur um einen maximalen Betrag sich ändern kann. Dieser so bestimmte Schätzwert ist auch durch einen Feinwinkelwert, einen Teilwinkelwert und gegebenenfalls einen Subwinkelwert kennzeichenbar, Der dann neu übertragene Feinwinkelwert des neu erfassten und vom Winkelsensor übertragenen Winkelwerts wird dann verwendet zur Bestimmung des neuen Winkelwerts, welcher dann sofort von der Regeleinheit verwendet wird. Nach der parallel hierzu erfolgten vollständigen Übertragung des neu erfassten Winkelwerts wird dann ein Vergleich ausgeführt mit dem nur aus dem übertragenen Feinwinkelwert bestimmten Wert, wodurch eine Sicherheitsgerichtete Überprüfung ausführbar ist. Das Verfahren wird wiederholt, wobei aus dem vollständig übertragenen Winkelwert wiederum die aktualisierte Winkelgeschwindigkeit bestimmt wird und dann entsprechend wiederholend verwendet wird.

In einer Ausführungsvariante wird der vollständig übertragene Winkelwert nur zu einem ersten Zeitschritt verwendet. In den nachfolgenden Zeitschritten wird dann mehrfach nur der aus dem jeweiligen Schätzwert und dem Feinwinkelwert, vorzugsweise auch aus einem zusätzlichen Subwinkelwert, bestimmte Winkelwert verwendet.

Zur weiteren Verbesserung ist ein Subwinkelbereich vorgesehen, dessen Auflösung zwischen der Auflösung des Feinwinkelbereichs und des Teilwinkelbereichs vorgesehen ist.

In einer ersten Ausführungsvariante werden zwei Spuren vorgesehen, nämlich die Teilwinkelspur und die Feinwinkelspur. Dabei sind in Umfangsrichtung m Teilwinkelberieche angeordnet und die Teilwinkelbereiche in Umfangsrichtung gleich lang. Ebenso sind die Feinwinkelbereiche in Umfangsrichtung gleich lang. Jedem Teilwinkelabschnitt sind die gleiche Anzahl von Feinwinkelbereichen zugeordnet, wobei diese Anzahl jeweils von 0 bis n - 1 durchzählbar ist. Dabei ist m und n jeweils ganzzahlig.

Nach einem ersten Zeitabschnitt, in weichem der Teilwinkelwert, also die Nummer des Teilwinkels vom Winkelsensor erfasst wird, und der Feinwinkelwert F1, also die Nummer des Feinwinkels vom Winkelsensor erfasst wird, wird nach einem Zeitabstand $\Delta t$ der Feinwinkelwert F2 erfasst.

Zur Bestimmung des Winkelwertes, also der fehlenden Information über den neuen Teilwinkelwert, wird aus der Differenz des neuen zum vorherigen Feinwinkelwert F2 - F1 und aus dem Vergleich von F1 und F2 bestimmt, ob ein Überlauf in positiver oder negativer Umdrehungsrichtung stattgefunden hat oder nicht. Hierzu ist wichtig, dass die mögliche maximale Winkelgeschwindigkeit v_max nur derart klein ist, dass gilt

$$- (½ * m - 1) \leq v\_max * \Delta t \leq (½ * m ),$$

Somit ist bei Überlauf nur der Eintritt in einen nächstbenachbarten Teilwinkel, also Teilwinkelbereich, möglich. Wenn also die Winkelerfassung in sehr kleinem Zeitabstand $\Delta t$ ausgeführt wird, ist eine eindeutige Rekonstruktion des neu erfassten Winkelwertes aus der bloßen Information des neu erfassten Feinwinkelmesswertes und des vorigen Winkeiwertes ermöglicht.

Diese Erfassung des Feinwinkelwertes ist nach einem jeweiligen weiteren Zeitabstand $\Delta t$ beliebig oft wiederholbar. Somit genügt sogar die Übertragung des Feinwinkelwertes allein, um den jeweils neu erfassten Winkelwert zu bestimmen, wobei allerdings zu einem ersten Zeitpunkt der erfasste Winkelwert vollständig bekannt sein muss.

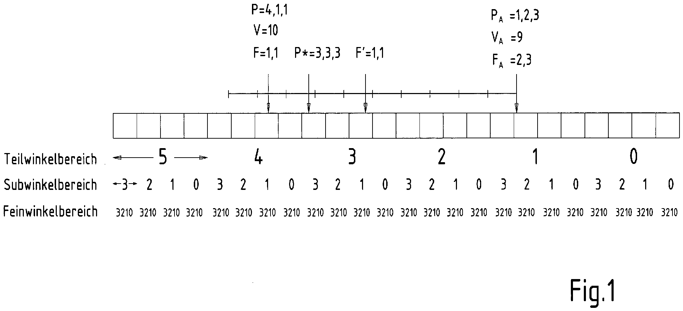

In der Figur 1 ist eine zweite Ausführungsvariante mit drei Spuren erläutert, nämlich mit einer Teilwinkelspur, einer Subwinkelspur und einer Feinwinkelspur, welche die Subwinkelspur feiner auflöst. Dabei sind in Umfangsrichtung m Teilwinkelberieche angeordnet, beispielsweise m = 32, und die Teilwinkelbereiche in Umfangsrichtung gleich lang. Ebenso sind die Subwinkelbereiche in Umfangsrichtung jeweils gleich lang, wobei jeder Teilwinkel in n Subwinkelbereiche aufgeteilt ist. Die Feinwinkelbereiche sind in Umfangsrichtung jeweils gleich lang, wobei jedem Subwinkelbereich q Feinwinkelbereiche zugeordnet sind. Jedem Teilwinkelabschnitt sind die gleiche Anzahl von Subwinkelbereichen zugeordnet, wobei diese Anzahl jeweils von 0 bis n -1 durchzählbar ist. Dabei ist m, q und n jeweils ganzzahlig. In Figur 1 ist q = 4 und n = 4.

Da die Winkelerfassung an einem System mit träger Masse ausgeführt wird und die auftretenden Beschleunigungen unterhalb eines Maximalwertes a_max liegen, ist eine Änderung der Winkelgeschwindigkeit innerhalb des Zeitabstandes $\Delta t$ nur um die maximale Geschwindigkeitsdifferenz

$$\Delta v\_max = a\_max * \Delta t$$

möglich.

Aus der zuletzt bekannten Winkelgeschwindigkeit v_alt und dem zuletzt bekannt Winkel $\alpha$-alt ergibt sich ein Schätzwert

$$\alpha\_Schätz = \alpha\_alt + v\_alt * \Delta t$$

Die Winkeländerung zu diesem Schätzwert beträgt maximal Av_max * $\Delta t$ und erzeugt einen maximalen Überlauf des Subwinkels in den nächstbenachbarten Subwinkelbereich.

Daher muss zur Bestimmung des nächsten Winkelwertes nicht der erfasste neue Wert des Teilwinkels, Subwinkels und Feinwinkels vorliegen sondern es genügen der Subwinkel und der Feinwinkel, wenn der für den vorigen Zeitabschnitt gültige Winkelwert bekannt ist. Denn aus dem Vergleich des alten Subwinkelwertes mit dem neuen Subwinkelwert und aus der Differenz zwischen neuem und alten Subwinkelwert ergibt sich der neue Subwinkelbereich. Da der neue Feinwinkel übermittelt ist, ist auch dieser Wert bekannt, wobei der Feinwinkelwert dem neuen Subwinkelwert eineindeutig einen Winkelwert zuordnet.

Dieses Verfahren ist in Figur 1 an einem konkreten Beispiel darstellbar: Der alte Winkelwert ist beispielhaft $P_A$ = (Teilwinkelwert = 1, Subwinkelwert = 2 , Feinwinkelwert = 3). Dabei beträgt die alte Winkelgeschwindigkeit 9 Subwinkelbereiche pro Zeitabschnitt $\Delta t$.

Somit ergibt sich ein Schätzwert von P*= (Teilwinkelwert = 3, Subwinkelwert = 3, Feinwinkeiwert = 3).

Wenn nun der neue Messwert den Feinwinkel 1 und Subwinkel 1 aufweist, ergeben sich zwei mögliche Winkelwerte, die als F = (Subwinkel 1, Feinwinkel 1) und F' = (Subwinkel 1, Feinwinkel 1) bezeichnet sind. Da nun aber die maximal auftretende Geschwindigkeitsänderung $\Delta v\_max = a\_max*\Delta t$ wiederum derart gewählt ist, dass $\Delta v\_max*\Delta t$ kleiner als der halbe Teilwinkelbereich ist, wird durch die Differenzbildung und den Vergleich klar feststellbar, dass der neue Winkelwert F ist, aber nicht F'. Der neue Winkelwert wird somit bestimmt als P= (Teilwinkelwert = 4, Subwinkelwert = 1, Feinwinkelwert = 1), woraus die neue Geschwindigkeit als 10 Subwinkeibereiche pro Zeitabschnitt $\Delta t$ bestimmt wird. Eine Übertragung des neu erfassten Teilwinkelwertes ist also einsparbar.

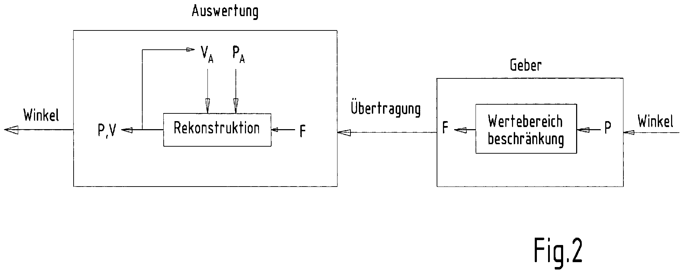

in Figur 2 ist das Verfahren näher dargestellt. Dabei wird zunächst die neu erfasste Information über den Winkelwert P im Winkelsensor reduziert auf eine Teilinformation F, welche nur den Subwinkelwert und den Feinwinkelwert, nicht aber den Teilwinkelwert enthält. Dieser Wert F wird übertragen an die Auswerteschaltung, welche vorzugsweise in der Steuerelektronik eines Wechselrichters oder Umrichters angeordnet ist.

In der Auswerteschaltung wird aus der Teilinformation F unter Berücksichtigung des zuvor erfassten oder bestimmten Winkelwertes $P_A$ und der zuvor bestimmten Winkelgeschwindigkeit $v_A$ der neu erfasste Winkelwert P und die neu auftretende Winkelgeschwindigkeit v bestimmt.

Bei weiteren erfindungsgemäßen Ausführungsbeispielen wird statt der Winkelposition eine lineare Position verwendet und somit statt des Teilwinkels eine Teilposition und dergleichen.

Die in den vorgenannten Ausführungsbeispielen beschriebenen Ausführungsbeispiele an Verfahren zum Übertragen einer Winkelinformation sind in einem Umrichter vorteilig anwendbar. Dabei speist der Umrichter einen Elektromotor, an dessen Rotorwelle ein Winkelsensor angeordnet ist, wobei die von diesem erfasste Winkelinformation in der vorgenannten Weise übertragen wird an eine Steuerelektronik des Umrichters, welche eine Regeleinheit aufweist. Die Regeleinheit verwendet die übertragene Winkelinformation zur Bestimmung eines derartigen Spannungsraumzeigers, welcher von der pulsweitenmoduliert angesteuerten Leistungselektronik des Umrichters erzeugt und zur Speisung des Motors verwendet wird.

Die Regeleinheit bestimmt jeweils zyklisch einen neuen Spannungsraumzeiger. In jedem Zyklus wird zunächst aus dem übertragenen zweiten Wert, also Subwinkelwert und/oder Feinwinkelwert, der neue Winkelwert bestimmt. Dabei ist vorzugsweise eine Prüfinformation, beispielsweise eine CRC-Datum, also cyclic redundancy check - Datum, verwendet. Auf diese Weise ist die Übertragung des zweiten Wertes sicher gestaltet und überprüfbar. Nach der Bestimmung des neuen Winkelwerts wird von der Regeleinheit ein neuer Wert für den Spannungsraumzeiger bestimmt. Somit ist in jedem Zyklus der neue Spannungsraumzeigerwert bestimmt. Die in jedem Zyklus noch verbleibende verfügbare Zeitspanne ist bei jedem Zyklus nicht stets gleichlang sondern schwankt abhängig von der Berechnungsdauer für den Spannungsraumzeiger. In dieser Zeitspanne wird der nachträglich übertragene erste Wert der Winkelinformation empfangen, insbesondere gefolgt von einer weiteren Prüfinformation, beispielsweise eine CRC-Datum, also cyclic redundancy check - Datum. Somit ist dann der erfasste Winkelwert aus dem ersten und zweiten Wert bestimmbar und vergleichbar mit dem vorher nur aus dem ersten Wert bestimmten Winkelwert. Auf diese Weise ist also eine Überprüfung des aus den eingeschränkten Informationen bestimmten Winkelwerts ausführbar und bei Abweichung gegebenenfalls eine entsprechende Aktion einleitbar. Wenn die im Zyklus verbleibende Zeitspanne nicht mehr ausreicht zur Bestimmung des erfassten Winkelwerts und zum Vergleich, wird dies in einem nachfolgenden Zyklus ausgeführt oder mit denn dann aktueller erfassten Werten wiederholt.

Auf diese Weise ist also die Sicherheit bei der Datenübertragung erhöht und trotzdem ein schnelles Bestimmen des Spannungsraumzeigers ermöglicht.

**Bezugszeichenliste**

$P_A$ zuvor erfasster Winkelwert
P* Schätzwert für Winkel
P neu bestimmter Winkelwert
F Zwischenwert
F' zweiter Zwischenwert
$V_A$ zuvor bestimmte Winkelgeschwindigkeit

**Patentansprüche**

1. Verfahren zur Regelung eines Antriebs, wobei zeitlich wiederkehrend Positionswerte erfasst werden und die zugehörige Information an eine Regelvorrichtung übertragen wird,
wobei der jeweilige Positionswert **gekennzeichnet ist durch** zumindest zwei Werte, insbesondere Teilwinkelwert und Feinwinkelwert, insbesondere digitale Werte, wobei der erste Wert mit einer ganzen Zahl kennzeichenbar ist und jeder Zahl ein Positionswertebereich zugeordnet ist,
wobei jedem durch einen ersten Wert gekennzeichneten Positionswertebereich zueinander separate Teilbereiche des Positionswertebereichs zugeordnet sind, wobei jeder dieser Teilbereiche durch einen zweiten Wert gekennzeichnet ist, der als ganze Zahl kennzeichenbar ist,
wobei der zweite Wert zeitlich vor dem ersten Wert übertragen wird,
**dadurch gekennzeichnet, dass**

(i) nach Übertragen des neu erfassten zweiten Wertes aus diesem neu erfassten und dem zuvor übertragenen zweiten Wert ein Modellwert für den ersten Wert bestimmt wird, und der so bestimmte Positionswert von einer Regeleinrichtung verwendet wird, um einen aktualisierten Wert einer Stellgröße der Regeleinrichtung zu bestimmen,
(ii) nach dem Übertragen des neu erfassten zweiten Wertes der neu erfasste erste Wert übertragen wird und dann der so bestimmte Modellwert mit dem neu erfassten ersten Wert verglichen wird und bei Nicht-Übereinstimmen eine Aktion ausgeführt wird,

insbesondere wobei die Aktion das Übermitteln und/oder Anzeigen einer Warninformation und/oder das Stillsetzen des Antriebs oder das Überführen des Antriebs in einen sicheren Zustand ist,
insbesondere wobei die Stellgröße ein Spannungsraumzeiger, insbesondere ein Statorspannungsraumzeiger eines Elektromotors des Antriebs, ist,
insbesondere wobei der Schritt (i) wiederholt wird.

2. Verfahren nach Anspruch 1,
**dadurch gekennzeichnet, dass**

- bei der Übertragung des zweiten Wertes eine Prüfinformation, insbesondere ein CRC-Datum, übertragen wird, insbesondere wobei bei Detektion einer Fehlübertragung eine Aktion ausgelöst wird, insbesondere wie Anzeigen und/oder Übermitteln einer Warninformation und/oder Abschalten des Antriebs und/oder Auslösen eines Sicheren Zustandes des Antriebs,
und/oder dass
- bei der Übertragung des ersten Wertes eine weitere Prüfinformation, insbesondere ein CRC-Datum, übertragen wird, insbesondere wobei bei Detektion einer Fehlübertragung eine Aktion ausgelöst wird, insbesondere wie Anzeigen und/oder Übermitteln einer Warninformation und/oder Abschalten des Antriebs und/oder Auslösen eines Sicheren Zustandes des Antriebs.

3. Verfahren nach einem der Ansprüche 1 bis 2,
**dadurch gekennzeichnet, dass**
das Verfahren zur zyklischen digitalen Übertragung eines Positionswertes eines bewegten Objektes mit träger Masse, insbesondere bei bekannter maximal erreichbaren Geschwindigkeit des Objektes, vorgesehen ist,
wobei der Wertebereich des übertragenen Positionswertes derart eingeschränkt ist, dass sich keine vollständige Umdrehung oder im Fall einer linearen Bewegung andere durch mechanische Gegebenheiten bedingte vollständige Periode abbilden lässt und die tatsächliche, insbesondere vollständige, Position durch Erkennen von Wertebereichsüberschreitungen in einer Auswerteeinheit gebildet wird, insbesondere

- wobei zu einem ersten Zeitpunkt eine nicht oder eine weit weniger stark wertebereichsbeschränkte Position als im kontinuierlichen Betrieb übertragen wird
- und/oder wobei der Wertebereich dadurch bestimmt wird, dass der Betrag der in einem Abtastzyklus auftretenden Wegdifferenz bei maximaler Geschwindigkeit kleiner als die Hälfte des gewählten Wertebereichs ist, wobei der Wertebereich möglichst klein gewählt wird
- und/oder wobei anstelle der wertebereichsbeschränkenden Absolutposition die Differenz zur vorherigen Position mit gleicher Wertebereichsbeschränkung übertragen wird.

4. Verfahren nach einem der Ansprüche 1 bis 3,
**dadurch gekennzeichnet, dass**
das Verfahren zur zyklischen digitalen Übertragung eines Positionswertes eines bewegten Objektes mit träger Masse, insbesondere bei bekannter maximal erreichbaren Geschwindigkeit des Objektes, vorgesehen ist,
wobei der Wertebereich des übertragenen Positionswertes gegenüber dem Wertebereich möglicher Positionswerte eingeschränkt ist, insbesondere so dass sich keine vollständige Umdrehung oder im Fall einer linearen Bewegung andere durch mechanische Gegebenheiten bedingte vollständige Periode abbilden lässt,
und die tatsächliche Position dadurch bestimmt wird, dass aus der vorherigen Position und der vorherig bestimmten Geschwindigkeit ein Schätzwert für die Position gebildet wird und diese mittels des wertebereichsbeschränkten übertragenen Positionswertes korrigiert wird, insbesondere

- wobei durch einen Vergleich des wertebereichsbeschränkten Positionsschätzwertes mit dem wertebereichsbeschränkten übertragenen Positionswert eine Wertebereichsüberschreitung ermittelt und zur Korrektur des Schätzwertes herangezogen wird,

- und/oder wobei einmalig am Anfang eine Position und eine Geschwindigkeit übertragen wird, deren Wertebereich den Bereich möglicher auftretender Positionen und Geschwindigkeiten umfasst

- und/oder wobei anstatt der wertebereichsbeschränkten Absolutposition die Differenz zur vorherigen Position mit gleicher Wertebereichsbeschränkung übertragen wird.

**5.** Verfahren nach einem der Ansprüche 1 bis 4, **dadurch gekennzeichnet, dass**
das Verfahren zur zyklischen digitalen Übertragung eines Positionswertes eines bewegten Objektes mit träger Masse, insbesondere bei bekannter maximal erreichbaren Geschwindigkeit des Objektes, vorgesehen ist,
wobei der Positionswert **gekennzeichnet ist durch** zumindest zwei Werte, insbesondere Teilwinkelwert und Subwinkelwert und/oder Feinwinkelwert, insbesondere digitale Werte,
wobei der erste Wert mit einer ganzen Zahl kennzeichenbar ist und jeder Zahl ein Positionswertebereich zugeordnet ist, insbesondere wobei jede Zahl einen jeweils zugeordneten Positionswertebereich kennzeichnet,
wobei jedem durch einen ersten Wert gekennzeichneten Positionswertebereich zueinander separate Teilbereiche des Positionswertebereichs zugeordnet sind, wobei jeder dieser Teilbereiche durch einen zweiten Wert gekennzeichnet ist, der als ganze Zahl kennzeichenbar ist,
wobei zu einem ersten Zeitpunkt ein Positionswert erfasst wird und - insbesondere danach - der zugehörige erste und zweite Wert übertragen wird,
**dadurch gekennzeichnet, dass**

    (i) ein weiterer Positionswert erfasst wird und der zugehörige, somit neu erfasste, zweite Wert übertragen wird,
    (ii) worauf aus dem neu erfassten, zweiten Wert und dem zuvor erfassten, zweiten Wert der durch den ersten Wert gekennzeichnete Positionswertebereich bestimmt wird, also somit auch der zum neu erfassten Positionswert zugehörige erste Wert.

**6.** Verfahren nach einem der Ansprüche 1 bis 4, **dadurch gekennzeichnet, dass**
das Verfahren zur digitalen Übertragung eines Positionswertes eines bewegten Objektes mit träger Masse vorgesehen ist,
wobei der Positionswert **gekennzeichnet ist durch** zumindest zwei Werte, insbesondere Teilwinkelwert und Subwinkelwert und/oder Feinwinkelwert, insbesondere digitale Werte,
wobei der erste Wert mit einer ganzen Zahl kennzeichenbar ist und jeder Zahl ein Positionsbereich zugeordnet ist, insbesondere wobei jede Zahl einen jeweils zugeordneten Positionsbereich kennzeichnet,
wobei jedem durch einen ersten Wert gekennzeichneten Positionswertebereich zueinander separate Teilbereiche des Positionswertebereichs zugeordnet sind, wobei jeder dieser Teilbereiche durch einen zweiten Wert gekennzeichnet ist, der als ganze Zahl kennzeichenbar ist,
wobei zu einem ersten Zeitpunkt ein Positionswert und eine Anfangsgeschwindigkeit erfasst wird und - insbesondere danach - der zugehörige erste und zweite Wert übertragen wird,
**dadurch gekennzeichnet, dass**

    (i) ein weiterer Positionswert erfasst wird und der zugehörige, somit neu erfasste, zweite Wert übertragen wird,
    insbesondere wobei die aktualisierte Geschwindigkeit bestimmt wird und übertragen wird, insbesondere zumindest in einer ausreichenden Genauigkeit, insbesondere wobei als Geschwindigkeit die Anzahl der überschrittenen dem zweiten Wert zugeordneten Bereiche, also Feinwinkelbereiche und/oder Subwinkelbereiche,
    (ii) worauf aus dem neu erfassten, zweiten Wert und dem zuvor erfassten, zweiten Wert der durch den ersten Wert gekennzeichnete Positionswertebereich bestimmt wird, also somit auch der zum neu erfassten Positionswert zugehörige erste Wert, wobei die Geschwindigkeit berücksichtigt wird .

**7.** Verfahren nach mindestens einem der vorangegangenen Ansprüche,
**dadurch gekennzeichnet, dass**
der Positionswert ein Winkelwert eines drehenden Teiles, also Objektes, wobei das Objekt als träge Masse ein Trägheitsmoment aufweist, ist oder ein Bahnpositionswert eines bewegten Teiles ist, das eine als Objekt eine träge Masse aufweist.

**8.** Verfahren nach mindestens einem der vorangegangenen Ansprüche,
**dadurch gekennzeichnet, dass**
die Übertragung zeitlich wiederkehrend wiederholt wird, insbesondere also zyklisch wiederholt wird, insbesondere in regelmäßigen Zeitabständen,
insbesondere wobei Schritt (i) und (ii) mehrfach nacheinander ausgeführt werden.

**9.** Verfahren nach mindestens einem der vorangegangenen Ansprüche,
**dadurch gekennzeichnet, dass**
bei Schritt (ii) aus dem zuvor erfassten oder bestimmten Positionswert und der zugehörigen Geschwindigkeit ein Schätzwert bestimmt wird und der zweite Wert des neu erfassten Positionswertes mit dem zweiten Wert des Schätzwertes verglichen wird und die Differenz zwischen dem zweiten Wert des neu erfassten Positionswertes und dem zweiten Wert des Schätzwertes bestimmt wird und daraus der zum neu erfassten Positionswert zugehörige Positionswertebereich bestimmt wird,
und/oder dass
bei Schritt (ii) die Differenz zwischen neu erfasstem zweiten Wert und zuvor erfasstem zweiten Wert bestimmt wird, insbesondere wobei bei Überschreiten eines halben Positionswertebereichs darauf geschlossen wird, dass der neu erfasste Positionswert in einem benachbarten Positionswertebereich liegt,
und/oder dass
bei Schritt (ii) ein Vergleich zwischen neu erfasstem zweiten Wert und zuvor erfasstem zweiten Wert bestimmt wird und bei derjenige benachbarte Bereich bestimmt wird, in welchem der neu erfasste Positionswert sich befindet, insbesondere wenn die Differenz zwischen neu erfasstem zweiten Wert und zuvor erfasstem zweiten Wert einen halben Positionswertebereich überschreitet,
und/oder dass
die Änderung der Geschwindigkeit zwischen zwei in einem Zeitabstand $\Delta t$ nacheinander ausgeführten Positionserfassungen auf einen kritischen Wert begrenzt ist, insbesondere welcher durch die träge Masse bestimmt oder zumindest mitbestimmt ist,
und/oder dass das Verfahren auf ein System angewendet wird, bei dem die auf das Objekt wirkende Kraft oder das auf das Objekt wirkende Drehmoment zwischen zwei in einem Zeitabstand $\Delta t$ nacheinander ausgeführten Positionserfassungen auf einen kritischen Wert begrenzt ist, insbesondere welcher durch die träge Masse bestimmt oder zumindest mitbestimmt ist.

**10.** Verfahren nach mindestens einem der vorangegangenen Ansprüche,
**dadurch gekennzeichnet, dass**
der Positionswert ein Winkelwert oder eine Linearposition ist, insbesondere wobei die Geschwindigkeit eine Winkelgeschwindigkeit oder eine in Linearrichtung auftretende Geschwindigkeit ist.

**11.** Verfahren nach mindestens einem der vorangegangenen Ansprüche,
**dadurch gekennzeichnet, dass**
wobei erster und zweiter Wert einer jeweiligen Spur, insbesondere Geberspur, zugeordnet sind, wobei der erste Wert einer feiner auflösenden Spur als der zweite Wert zugeordnet ist.

**12.** Verfahren nach mindestens einem der vorangegangenen Ansprüche,
**dadurch gekennzeichnet, dass**
jedem durch einen zweiten Wert, insbesondere Subwinkelwert, gekennzeichneten Positionswertebereich zueinander separate Teilbereiche des Positionswertebereichs zugeordnet sind, wobei jeder dieser Teilbereiche durch einen dritten Wert, insbesondere Feinwinkelwert, gekennzeichnet ist, der als ganze Zahl kennzeichenbar ist,
insbesondere wobei zu dem ersten Zeitpunkt der Positionswert erfasst wird und der zugehörige erste und zweite und dritte Wert übertragen wird,
wobei der dritte mit dem zweiten Wert übertragen wird, insbesondere vor oder nach dem zweiten Wert.

**13.** Vorrichtung, mit einer Regelvorrichtung, die zur Regelung eines Antriebs ausgelegt ist, wobei die Vorrichtung so ausgebildet ist ein Verfahren nach mindestens einem der vorangegangenen Ansprüche auszuführen, und einem Mittels zur zeitlich wiederkehrenden Erfassung von Positionswerten und einem Mittel zur Übertragung der zugehörigen Information an eine Regelvorrichtung,
wobei ein Sensor zur Erfassung eines Positionswertes über eine digitale Schnittstelle mit einer Auswerteeinheit verbunden ist,
wobei die Auswerteeinheit einen Speicher aufweist und Mittel aufweist, die dazu ausgelegt sind, den Positionswert aus einem übertragenen wertebereichsbeschränkten Positionswert zu bestimmen,
insbesondere wobei die Auswerteeinheit mit einer Regeleinrichtung verbunden ist.

## Claims

**1.** A method for controlling a drive,
wherein position values are periodically detected and the associated information is transmitted to a control device,
wherein the respective position value is **characterised by** at least two values, in particular partial angle value and fine angle value, in particular digital values,
wherein the first value is able to be characterised with a whole number and a range of position values is associated with each number,
wherein partial ranges of the range of position values which are separate from each other are associated with each range of position values which is **characterised by** a first value, wherein each of these partial ranges is **characterised by** a second value which can be characterised as a whole number,
wherein the second value is transmitted timewise before the first value,

**characterised in that**

(i) after transmission of the newly detected second value a model value for the first value is determined from this newly detected and the previously transmitted second value, and the position value thus determined is used by a control means in order to determine an updated value of a controlled variable of the control means,
(ii) after the transmission of the newly detected second value the newly detected first value is transmitted and then the model value thus determined is compared with the newly detected first value and if they do not match an action is carried out,

in particular with the action being the communicating and/or displaying of warning information and/or the shutting down of the drive or the converting of the drive into a safe state,
in particular with the controlled variable being a voltage space vector, in particular a stator voltage space vector of an electric motor of the drive,
in particular with step (i) being repeated.

2. A method according to Claim 1,
**characterised in that**

- upon the transmission of the second value an item of check information, in particular a CRC data item, is transmitted, in particular with upon detection of a faulty transmission an action being triggered, in particular such as displaying and/or communicating warning information and/or switching off the drive and/or triggering a safe state of the drive,
and/or **in that**
- upon the transmission of the first value a further item of check information, in particular a CRC data item, is transmitted, in particular with upon detection of a faulty transmission an action being triggered, in particular such as displaying and/or communicating warning information and/or switching off the drive and/or triggering a safe state of the drive.

3. A method according to one of Claims 1 to 2,
**characterised in that**
the method is provided for the cyclic digital transmission of a position value of a moving object having inertial mass, in particular at a known maximum achievable speed of the object,
with the range of values of the transmitted position value being restricted such that no complete revolution, or in the case of a linear movement other complete period contingent on mechanical conditions, can be mapped, and the actual, in particular complete, position is formed by recognition of instances of exceedancc of a range of values in an evaluation unit,
in particular

- with at a first point in time a not value-range-restricted position or a far less greatly value-range-restricted position than in continuous operation being transmitted
- and/or with the range of values being determined **in that** the amount of the path difference occurring in a scanning cycle at maximum speed is less than half the chosen range of values, the range of values being chosen to be as small as possible
- and/or with instead of the value-range-restricting absolute position the difference from the previous position being transmitted with the same value-range restriction.

4. A method according to one of Claims 1 to 3,
**characterised in that**
the method is provided for the cyclic digital transmission of a position value of a moving object having inertial mass, in particular at a known maximum achievable speed of the object,
with the range of values of the transmitted position value being restricted relative to the range of values of possible position values, in particular so that no complete revolution, or in the case of a linear movement other complete period contingent on mechanical conditions, can be mapped,
and the actual position is determined **in that** an estimated value for the position is formed from the previous position and the previously determined speed, and this position is corrected by means of the value-range-restricted transmitted position value,
in particular

- with by a comparison of the value-range-restricted estimated position value with the value-range-restricted transmitted position value an exceedance of a range of values being ascertained and used for correcting the estimated value,
- and/or with once at the start a position and a speed being transmitted, the range of values of which comprises the range of possible positions and speeds occurring
- and/or with instead of the value-range-restricted absolute position the difference from the previous position being transmitted with the same value-range restriction.

5. A method according to one of Claims 1 to 4,
**characterised in that**
the method is provided for the cyclic digital transmission of a position value of a moving object having inertial mass, in particular at a known maximum achievable speed of the object,

with the position value being **characterised by** at least two values, in particular partial angle value and subangle value and/or fine angle value, in particular digital values,

with the first value being able to be characterised with a whole number and a range of position values being associated with each number, in particular with each number characterising a range of position values which is associated in each case,

with partial ranges of the range of position values which are separate from each other being associated with each range of position values which is **characterised by** a first value, each of these partial ranges being **characterised by** a second value which can be characterised as a whole number,

with a position value being detected at a first point in time and - in particular thereafter - the associated first and second values being transmitted,

**characterised in that**

(i) a further position value is detected and the associated, hence newly detected, second value is transmitted,

(ii) whereupon the range of position values **characterised by** the first value is determined from the newly detected second value and the previously detected second value, i.e. thus also the first value associated with the newly detected position value.

6. A method according to one of Claims 1 to 4, **characterised in that**
the method is provided for the digital transmission of a position value of a moving object having inertial mass,

with the position value being **characterised by** at least two values, in particular partial angle value and subangle value and/or fine angle value, in particular digital values,

with the first value being able to be characterised with a whole number and a position range being associated with each number, in particular with each number characterising a position range which is associated in each case,

with partial ranges of the range of position values which are separate from each other being associated with each range of position values which is **characterised by** a first value, each of these partial ranges being **characterised by** a second value which can be characterised as a whole number,

with a position value and an initial speed being detected at a first point in time and - in particular thereafter - the associated first and second values being transmitted,

**characterised in that**

(i) a further position value is detected and the associated, hence newly detected, second value is transmitted,

in particular with the updated speed being determined and transmitted, in particular at least in a sufficient accuracy, in particular wherein as speed the number of exceeded ranges associated with the second value, i.e. fine angle ranges and/or subangle ranges,

(ii) whereupon the range of position values **characterised by** the first value is determined from the newly detected second value and the previously detected second value, i.e. thus also the first value associated with the newly detected position value, with the speed being taken into account.

7. A method according to at least one of the preceding claims,
**characterised in that**
the position value is an angle value of a rotating part, i.e. object, the object having a moment of inertia as inertial mass, or is a path position value of a moving part, which has an inertial mass as object.

8. A method according to at least one of the preceding claims,
**characterised in that**
the transmission is repeated periodically, in particular therefore is repeated cyclically, in particular at regular intervals,
in particular with steps (i) and (ii) being carried out multiple times in succession.

9. A method according to at least one of the preceding claims,
**characterised in that**
in step (ii) an estimated value is determined from the previously detected or determined position value and the associated speed, and the second value of the newly detected position value is compared with the second value of the estimated value, and the difference between the second value of the newly detected position value and the second value of the estimated value is determined and the range of position values associated with the newly detected position value is determined therefrom,
and/or **in that**
in step (ii) the difference between the newly detected second value and the previously detected second value is determined, in particular with a conclusion being drawn if a half range of position values is exceeded that the newly detected position value lies in an adjacent range of position values,
and/or **in that**
in step (ii) a comparison between the newly detected second value and the previously detected second value is determined, and [in] that adjacent range in which the newly detected position value is located is determined, in particular if the difference between the newly detected second value and the previously detected second value exceeds a half range of position values,

and/or **in that**

the change in the speed between two position detections carried out in succession in an interval Δt is limited to a critical value, in particular which is determined or at least co-determined by the inertial mass, and/or **in that** the method is applied to a system in which the force acting on the object or the torque acting on the object between two position detections carried out in succession in an interval Δt is limited to a critical value, in particular which is determined or at least co-determined by the inertial mass.

10. A method according to at least one of the preceding claims,

    **characterised in that**

    the position value is an angle value or a linear position, in particular with the speed being an angular velocity or a speed occurring in a linear direction.

11. A method according to at least one of the preceding claims,

    **characterised in that**

    wherein the first and second values are associated with a respective track, in particular encoder track, the first value being associated with a track of finer resolution than the second value.

12. A method according to at least one of the preceding claims,

    **characterised in that**

    partial ranges of the range of position values which are separate from each other are associated with each range of position values which is **characterised by** a second value,

    in particular subangle value, each of these partial ranges being **characterised by** a third value, in particular fine angle value, which can be characterised as a whole number,

    in particular with the position value being detected at the first point in time and the associated first and second and third values being transmitted,

    the third value being transmitted with the second value, in particular before or after the second value.

13. A device, with a control device which is designed to control a drive, wherein the device is formed so as to carry out a method according to at least one of the preceding claims,

    and a means for periodically detecting position values and a means for transmitting the associated information to a control device,

    wherein a sensor for detecting a position value is connected via a digital interface to an evaluation unit, wherein the evaluation unit has a memory and has means which are designed to determine the position value from a transmitted value-range-restricted position value,

in particular wherein the evaluation unit is connected to a control means.

## Revendications

1. Procédé de régulation d'une unité d'entraînement, dans lequel des valeurs de position sont détectées de façon récurrente dans le temps et l'information correspondante est transmise à un dispositif de régulation,

   dans lequel la valeur de position respective est **caractérisée par** au moins deux valeurs, en particulier une valeur d'angle partiel et une valeur d'angle fin, en particulier des valeurs numériques,

   dans lequel la première valeur peut être **caractérisée par** un nombre entier et une plage de valeurs de position est associée à chaque nombre,

   dans lequel à chaque plage de valeurs de position **caractérisée par** une première valeur sont associées des plages partielles séparées entre elles de la plage de valeurs de position, chacune de ces plages partielles étant **caractérisée par** une deuxième valeur qui peut être **caractérisée** comme un nombre entier,

   dans lequel la deuxième valeur est transmise avant la première valeur dans le temps, **caractérisé en ce que**

   (i) après transmission de la deuxième valeur nouvellement détectée, une valeur modèle pour la première valeur est déterminée à partir de cette deuxième valeur nouvellement détectée et de la deuxième valeur précédemment transmise, et la valeur de position ainsi déterminée est utilisée par un dispositif de régulation pour déterminer une valeur actualisée d'une grandeur réglante du dispositif de régulation,

   (ii) après la transmission de la deuxième valeur nouvellement détectée, la première valeur nouvellement détectée est transmise, puis la valeur modèle ainsi déterminée est comparée avec la première valeur nouvellement détectée et, en cas de non-coïncidence, une action est exécutée,

   en particulier dans lequel l'action est la transmission et/ou l'affichage d'une information d'avertissement et/ou l'arrêt de l'unité d'entraînement et/ou la mise de l'unité d'entraînement dans un état sûr,

   en particulier dans lequel la grandeur réglante est un vecteur spatial de tension, en particulier un vecteur spatial de tension de stator d'un moteur électrique de l'unité d'entraînement,

   en particulier dans lequel l'étape (i) est répétée.

**2.** Procédé selon la revendication 1,
**caractérisé en ce que**

- lors de la transmission de la deuxième valeur, une information de contrôle, en particulier une donnée CRC, est transmise, en particulier dans lequel, en cas de détection d'un défaut de transmission, une action est déclenchée, en particulier comme l'affichage et/ou la transmission d'une information d'avertissement et/ou l'arrêt de l'unité d'entraînement et/ou le déclenchement d'un état sûr de l'unité d'entraînement, et/ou que

- lors de la transmission de la première valeur, une autre information de contrôle, en particulier une donnée CRC, est transmise, en particulier dans lequel, en cas de détection d'un défaut de transmission, une action est déclenchée, en particulier comme l'affichage et/ou la transmission d'une information d'avertissement et/ou l'arrêt de l'unité d'entraînement et/ou le déclenchement d'un état sûr de l'unité d'entraînement.

**3.** Procédé selon l'une des revendications 1 à 2,
**caractérisé en ce que**
le procédé est prévu pour la transmission numérique cyclique d'une valeur de position d'un objet en mouvement pourvu d'une masse inerte, en particulier lorsque la vitesse maximale atteignable par l'objet est connue,
dans lequel la plage de valeurs de la valeur de position transmise est limitée de sorte qu'aucune révolution complète ou, dans le cas d'un mouvement linéaire, aucune autre période complète liée à des conditions mécaniques ne puisse être reproduite et la position réelle, en particulier complète, est formée par détection de dépassements de la plage de valeurs dans une unité d'évaluation,
en particulier

- dans lequel, à un premier instant, une position non limitée ou beaucoup moins fortement limitée dans sa plage de valeurs qu'en fonctionnement continu est transmise,
- et/ou dans lequel la plage de valeurs est déterminée par le fait que le montant de la différence de parcours apparaissant dans un cycle d'échantillonnage à la vitesse maximale est inférieur à la moitié de la plage de valeurs choisie, la plage de valeurs étant choisie aussi petite que possible
- et/ou dans lequel la différence par rapport à la position précédente avec même limitation de la plage de valeurs est transmise à la place de la position absolue limitée dans sa plage de valeurs.

**4.** Procédé selon l'une des revendications 1 à 3,

**caractérisé en ce que**
le procédé est prévu pour la transmission numérique cyclique d'une valeur de position d'un objet en mouvement pourvu d'une masse inerte, en particulier lorsque la vitesse maximale atteignable par l'objet est connue,
dans lequel la plage de valeurs de la valeur de position transmise est limitée par rapport à la plage de valeurs des valeurs de position possibles, en particulier de sorte qu'aucune révolution complète ou, dans le cas d'un mouvement linéaire, aucune autre période complète liée à des conditions mécaniques ne puisse être reproduite,
et la position réelle est déterminée par le fait qu'une valeur estimée pour la position est formée à partir de la position précédente et de la vitesse précédemment déterminée et que celle-ci est corrigée au moyen de la valeur de position transmise, limitée dans sa plage de valeurs,
en particulier

- dans lequel un dépassement de la plage de valeurs est déterminé par une comparaison de la valeur de position estimée, limitée dans sa plage de valeurs, avec la valeur de position transmise, limitée dans sa plage de valeurs, et utilisé pour corriger la valeur estimée,
- et/ou dans lequel, une seule fois au début, une position et une vitesse, dont la plage de valeurs comprend la plage des positions et vitesses possibles, sont transmises
- et/ou dans lequel la différence par rapport à la position précédente avec même limitation de la plage de valeurs est transmise à la place de la position absolue limitée dans sa plage de valeurs.

**5.** Procédé selon l'une des revendications 1 à 4,
**caractérisé en ce que**
le procédé est prévu pour la transmission numérique cyclique d'une valeur de position d'un objet en mouvement pourvu d'une masse inerte, en particulier lorsque la vitesse maximale atteignable par l'objet est connue,
dans lequel la valeur de position est **caractérisée par** au moins deux valeurs, en particulier une valeur d'angle partiel et une valeur de sous-angle et/ou une valeur d'angle fin, en particulier des valeurs numériques,
dans lequel la première valeur peut être **caractérisée par** un nombre entier et une plage de valeurs de position est associée à chaque nombre, en particulier chaque nombre caractérisant une plage de valeurs de position respectivement associée,
dans lequel à chaque plage de valeurs de position **caractérisée par** une première valeur sont associées des plages partielles séparées entre elles de la plage de valeurs de position, chacune de ces plages partielles étant **caractérisée par** une deuxième valeur qui peut être **caractérisée** comme un nombre entier,

dans lequel, à un premier instant, une valeur de position est détectée et - en particulier après cela - la première et la deuxième valeur associée sont transmises,

**caractérisé en ce que**

(i) une autre valeur de position est détectée et la deuxième valeur associée, donc nouvellement détectée, est transmise,

(ii) après quoi, la plage de valeurs de position **caractérisée par** la première valeur est déterminée à partir de la deuxième valeur nouvellement détectée et de la deuxième valeur précédemment détectée, et par conséquent aussi la première valeur associée à la valeur de position nouvellement détectée.

6. Procédé selon l'une des revendications 1 à 4, **caractérisé en ce que**
le procédé est prévu pour la transmission numérique d'une valeur de position d'un objet en mouvement pourvu d'une masse inerte,

dans lequel la valeur de position est **caractérisée par** au moins deux valeurs, en particulier une valeur d'angle partiel et une valeur de sous-angle et/ou une valeur d'angle fin, en particulier des valeurs numériques,

dans lequel la première valeur peut être **caractérisée par** un nombre entier et une plage de positions est associée à chaque nombre, en particulier chaque nombre caractérisant une plage de positions respectivement associée,

dans lequel à chaque plage de valeurs de position **caractérisée par** une première valeur sont associées des plages partielles séparées entre elles de la plage de valeurs de position, chacune de ces plages partielles étant **caractérisée par** une deuxième valeur qui peut être **caractérisée** comme un nombre entier,

dans lequel, à un premier instant, une valeur de position et une vitesse initiale sont détectées et - en particulier après cela - la première et la deuxième valeur associée sont transmises,

**caractérisé en ce que**

(i) une autre valeur de position est détectée et la deuxième valeur associée, donc nouvellement détectée, est transmise,
en particulier la vitesse actualisée étant déterminée et transmise, en particulier au moins avec une précision suffisante, en particulier en tant que vitesse le nombre de plages, donc de plages d'angles fins et/ou plages de sous-angles, dépassées associées à la deuxième valeur,

(ii) après quoi, la plage de valeurs de position **caractérisée par** la première valeur est déterminée à partir de la deuxième valeur nouvellement détectée et de la deuxième valeur précédemment détectée, et par conséquent aussi la première valeur associée à la valeur de position nouvellement détectée, la vitesse étant prise en compte.

7. Procédé selon au moins l'une des revendications précédentes,
**caractérisé en ce que**
la valeur de position est une valeur d'angle d'une pièce, donc d'un objet, en rotation, l'objet présentant, en tant que masse inerte, un moment d'inertie, ou une valeur de position sur une trajectoire d'une pièce en mouvement qui présente, en tant qu'objet, une masse inerte.

8. Procédé selon au moins l'une des revendications précédentes,
**caractérisé en ce que**
la transmission est répétée de façon récurrente dans le temps, donc en particulier répétée cycliquement, en particulier à intervalles de temps réguliers,
en particulier les étapes (i) et (ii) étant exécutées plusieurs fois l'une après l'autre.

9. Procédé selon au moins l'une des revendications précédentes,
**caractérisé en ce**
**qu'**à l'étape (ii), une valeur estimée est déterminée à partir de la valeur de position précédemment détectée ou déterminée et de la vitesse associée et la deuxième valeur de la valeur de position nouvellement détectée est comparée avec la deuxième valeur de la valeur estimée et la différence entre la deuxième valeur de la valeur de position nouvellement détectée et la deuxième valeur de la valeur estimée est déterminée et utilisée pour déterminer la plage de valeurs de position associée à la valeur de position nouvellement détectée,
et/ou
**qu'**à l'étape (ii), la différence entre la deuxième valeur nouvellement détectée et la deuxième valeur précédemment détectée est déterminée, en particulier dans lequel, en cas de dépassement d'une demi-plage de valeurs de position, on conclut que la valeur de position nouvellement détectée se situe dans une plage de valeurs de position voisine, et/ou
**qu'**à l'étape (ii), une comparaison entre la deuxième valeur nouvellement détectée et la deuxième valeur précédemment détectée est déterminée et la plage voisine dans laquelle la valeur de position nouvellement détectée se trouve est déterminée, en particulier lorsque la différence entre la deuxième valeur nouvellement détectée et la deuxième valeur précédemment détectée dépasse une demi-plage de valeurs de position,

et/ou

**que** le changement de vitesse entre deux détections de position effectuées l'une après l'autre à un intervalle de temps Δt est limité à une valeur critique, laquelle est en particulier déterminée ou au moins partiellement déterminée par la masse inerte, et/ou

**que** le procédé est appliqué sur un système, dans lequel la force agissant sur l'objet ou le couple agissant sur l'objet est limité(e) à une valeur critique entre deux détections de position effectuées l'une après l'autre à un intervalle de temps Δt, laquelle est en particulier déterminée ou au moins partiellement déterminée par la masse inerte.

10. Procédé selon au moins l'une des revendications précédentes,
**caractérisé en ce que**
**que** la valeur de position est une valeur d'angle ou une position linéaire, la vitesse étant en particulier une vitesse angulaire ou une vitesse apparaissant en direction linéaire.

11. Procédé selon au moins l'une des revendications précédentes,
**caractérisé en ce**
**qu'**une première et deuxième valeur sont associées à une piste respective, en particulier une piste de codeur, la première valeur étant associée à une piste à résolution plus fine que la deuxième valeur.

12. Procédé selon au moins l'une des revendications précédentes,
**caractérisé en ce**
**qu'**à chaque plage de valeurs de position **caractérisée par** une deuxième valeur, en particulier une valeur de sous-angle, sont associées des plages partielles séparées entre elles de la plage de valeurs de position, chacune de ces plages partielles étant **caractérisée par** une troisième valeur, en particulier une valeur d'angle fin, qui peut être **caractérisée** comme un nombre entier,
en particulier dans lequel, au premier instant, la valeur de position est détectée et la première, la deuxième et la troisième valeur associée sont transmises, la troisième valeur étant transmise avec la deuxième valeur, en particulier avant ou après la deuxième valeur.

13. Dispositif, comprenant un dispositif de régulation qui est conçu pour réguler une unité d'entraînement, lequel dispositif est conçu pour mettre en oeuvre un procédé selon au moins l'une des revendications précédentes, et comprenant un moyen de détection récurrente dans le temps de valeurs de position et un moyen de transmission de l'information correspondante à un dispositif de régulation,
dans lequel un capteur pour détecter une valeur de position est relié à une unité d'évaluation par l'intermédiaire d'une interface numérique,
dans lequel l'unité d'évaluation présente une mémoire et des moyens qui sont conçus pour déterminer la valeur de position à partir d'une valeur de position transmise, limitée dans sa plage de valeurs,
dans lequel l'unité d'évaluation est en particulier reliée à un dispositif de régulation.

Fig.1

Fig.2

**EP 2 721 375 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007062333 B3
- US 2001006344 A1